# EUROPEAN PATENT APPLICATION

(11) **EP 2 717 251 A1**
(43) Date of publication of application: **09.04.2014**
(21) Application number: 11871936.8
(22) Date of filing: 06.09.2011
(51) Int. Cl.: G09G 3/32

(54) **IN-TUNNEL DISPLAY SYSTEM**

(71) Applicant: Beijing Jinri Hengsheng Science & Technology Co., Ltd., Beijing 102600 (CN)
(72) Inventor: LV, Min, Beijing 102600 (CN); QI, Wanli, Beijing 102600 (CN)
(74) Representative: Johansson, Lars E.
(86) International application number: PCT/CN2011/079391
(87) International publication number: WO 2013/033892

(57) **Abstract**

Provided is a tunnel synchronization display system, including an interaction module, a communication module, a display module and a synchronization module. The interaction module is used for storing video data or image data; the communication module is connected to the interaction module, to transmit the video data or image data to the display module; the synchronization module is respectively connected to the communication module and the display module, used for controlling synchronization between the display data of the display module and the running speed of a train in the tunnel; and the display module is provided in the running tunnel of trains, used for displaying data from the interaction module according to a synchronization signal sent by the synchronization module.

## Description

### TECHNICAL FIELD

This invention involves an in-tunnel display technology, or more specifically an in-tunnel display system which can be used in tunnels or underground traffic to be synchronous with running trains.

### BACKGROUND

Tunnel traffic is increasingly becoming a preferred way of transportation, due to various advantages such as being fast, convenient and fast. In Beijing and Tokyo for example, there are about 7 respectively 8 million passengers every day. For passengers on the subway the travel can be quite boring due to a lack of recreational facilities on the subway. Therefore, advertisements or entertainment programs in the subway is not only relaxing for passengers during the travel, but can also make use of the high passenger flow in the subway to make more people notice these advertisements and thus bring more economic benefit to the advertisers.

Similarly, the same problem also occurs in tunnel traffic of highway and railway or undersea tunnel traffic which will be laid in large scale in the future. Furthermore, the time passengers spend in such tunnel traffic as subways and undersea traffic is comparatively short, and the requirements of integrity of data information to be displayed are thus lowered. The length of content to be displayed can also be short.

At present, there are few audio and video players installed in railway- and highway tunnels. The main reason is that the cost is too high in relation to the relatively small volume of traffic, which leads to that the benefits are hard to meet the installation requirements. There are mainly two technical solutions of how to play video on the running urban subway. The first way is to install display screens into the compartment that can display video as the mobile TV does. Its disadvantages are the high cost and the mobile signal that is subject to strong interference. The second way is to set LED lights in the tunnel and let the tunnel become the black background. The second way has many advantages, it will for example not be influenced by the mobile signals, it can display on a large area and it is easier to update the display content. However, there are also disadvantages with this solution. There are two main problems, the first being that it is difficult to achieve synchronization between the playing of the video and the running status of the trains. The second problem is that when taking a close look at the LED videos there are many large particles and a rough pixel display that can often result in poor video display definition.

This is why there is a need for a solution of how to synchronously display HD advertisements or other video programs in running subway trains and tunnel traffic at a high speed.

### CONTENTS

To overcome problems with existing technology, the invention use an in-tunnel video display system. This invention will solve the problem of non-synchronization between the running train and the video display and also the problem of poor display quality.

A tunnel synchronization display system is provided based on one aspect of the invention, which includes an interaction module, a communication module, a display module and a synchronization module. The interaction module is used for storing video data or image data. The communication module is connected to the interaction module to transmit video data or image data to the display module. The synchronization module is respectively connected to the communication module and the display module, used for controlling synchronization between the display data of the display module and the running speed of a train in the tunnel. The display module is provided in the tunnel, used to display data from the interaction module according to a synchronization signal sent by the synchronization module.

Compared to existing technology this invention will, when applying above technical solutions, have the following effects:
1. The invention uses synchronized speed measurement technology and makes use of the human vision persistence phenomenon and television scanning principle. While trains are running, passengers and display devices outside the trains will interact at a certain rate. The display LED light will pass the human vision range horizontally. Each display device will display corresponding data information and the human eye will synthesize data seen into complete images to be displayed synchronously.
2. The invention effectively improves frame data display frequency and avoids flicker by means of the virtual pixel and interlaced scanning technology of two-line LED lights. It also reduces pixel pitch exponentially by using spatial interpolation scanning technology, and thus ensures a clear image when viewed at close range. Furthermore, it coordinates with corresponding LED drives to achieve the purpose of displaying HD images synchronously

### DESCRIPTION OF ATTACHED DRAWINGS

Drawing 1 is a structure diagram of the tunnel display system provided based on the invention.
Drawing 2 is a structure diagram of the synchronization module of the invention.
Drawing 3 is a structure diagram of the display module of the invention.
Drawing 4 is a structure drawing of the display unit of the invention.
Drawing 5 is a sketch map of synthesizing the pixel display effect,
Drawing 6 is a structure drawing of LED drive units.
Drawing 7 is a comparison diagram of display effect between the system of the invention and the existing system.
Drawing 8 is a running flow diagram of the synchronization module of the invention.

As shown in the drawings, specific structures and devices are marked in order to define the structures of implementation samples of the invention, which is only for the purpose of general description, instead of intending to limit the invention to these specific structures, devices and environments. According to specific needs, ordinary technical personnel in this field can adjust or modify these devices or environments and the adjustments or modifications are still covered in the claims attached below.

### SPECIFIC IMPLEMENTATION METHODS

A detailed description of the in-tunnel video display system provided in the invention in accordance with attached drawings and specific implementation samples is made below.

The scope of the invention also includes any substitution, modification or equivalent method and plan based on the essence and the scope of the invention. The following section includes details on selected implementation samples to make common man understand the invention. People with technical experience in this field will understand the invention without these details. Detailed descriptions of well known methods, procedures, processes, components and circuits will not be included, in order to avoid confusion on what the essence of the invention is.

As shown in Drawing 1, the invention provides a tunnel synchronization video display system that includes power supply module 10, interaction module 30, communication module 40, display module 50 and synchronization module 60. Power supply module 10 refers to every power supply interface and battery module used for providing power support to each functional module of the invention. Interaction module 30 is used for storing video data or image data. Communication module 40 is connected to interaction module 30, to transmit video data or image data to the display module. Synchronization module 60 is in turn connected to the communication module and the display module and is used to control synchronization between the display information of the display module and the speed of the train in the tunnel. The synchronization module is also used to send the synchronization signal via the communication module to the interaction module to adjust data transmission of the interaction module. The display module is provided in the tunnel and is used to display data from the interaction module according to the synchronization control information sent by the synchronization module.

Interaction module 30 is also used to make images, such as superposing ad images, to be publicized by clients into GIF or other video-play-support formats and to store them. The interaction module can set certain parameters for managers, which can include updating program data, program broadcast sequence, program display brightness, startup and shutdown time of system devices. Furthermore, interaction module 30 is also used to manage physical media, including keyboard and mouse, or to adjust display parameters of display module 50, such as setting display time, program table and broadcast sequence.

Display module 50 is provided to display video images in the tunnel where the trains are running. Communication module 40 transmits video data to the display module 50 and gives feedback about information such as whether data is transmitted successfully and current transmission state. Synchronization module 60 is the key point of the whole system and it is used to provide a synchronization signal between the running state of the trains and the display data of display module 50. Thus, to make sure that the display starts playing when a train enters the display area and stops playing when the train leaves the area, and ensure that while it is playing the passengers in the train see complete images that are synchronous with the running train.

As shown in Drawing 2, the synchronization module is used to obtain data on the speed of the train and convert this data to the time it will take for the train to pass the spacing S of two adjacent pixels. Thus, the synchronization module will provide a signal of controlling time interval between the N column image and N+1 column image. Images are displayed by means of column scanning, which means that the synchronization is based on the speed of the train. Synchronization module 60 includes several velometers, such as velometer 611, 612, 613, 614, 615 and 616 and also the synchronization signal processor 600 which further includes speed measurement signal receiver 601, speed signal processor 602, synchronization signal generator 603 and communication interface 604. ,

The velometers 611, 612, 613, 614, 615 and 616 will record the time lag of wheels blocking two laser lines successively when a train passes and then work out the train speed (v= L I t) through two laser sensors arranged on the rail sides with the fixed spacing L (the laser line is parallel to the rail surface and perpendicular to the rail at the xl mm of the rail surface). When a passing train is detected by the velometers 611, 612, 613, 614, 615 and 616, each will send information to the above mentioned synchronization signal processor 600. The synchronization signal processor 600 will then work out the spacing S of two adjacent pixels (t 1=v*) and send the speed values as synchronization signals to the above mentioned display module 50. The video image information will be displayed according to the synchronization signal instructions in the following Table 1.

**Table 1 Synchronization Signal Instructions**

| Preamble | | Display Module Address | | Program Number | Brightne ss Value | Column Number | | Speed Value | | CRC Check | |
|---|---|---|---|---|---|---|---|---|---|---|---|
| OAAH | 55H | 0~255 | 0~255 | 0~7 | 0~16 | 0~ 1 | 0~255 | 0~255 | 0~255 | CRC high | CRC low |

The velometers 611, 612, 13, 614, 615 and 616 are successively arranged in the tunnel between two subway stations. In most cases, the velometers will be arranged in the area where the display module is installed, in order to save arrangement cost. The first velometer will often be installed on the ground under the first display module and there are no special requirements on the distance between the first and second velometers. The laser reflection switch is used as the criterion. When the first train passes, the laser of the velometer 611 will be blocked and whether the train has come or not can be determined by the current status of the switch. Signals are sent when the train passes the velometer 612. Since we already know the distance between the two velometers and the signal time delay, we can work out the speed of the train running from velometer 611 to velometer 612. Therefore, the speed of the train in each time period in the whole tunnel can be calculated.

All velometers will stop working after the train has passed by. For example, in order to save energy, when the train passes by velometer 630 all of velometers 611-629 will stop working.

Moreover, the synchronization signal processor 600 further includes speed measurement signal receiver 601, speed signal processor 602, synchronization signal generator 603 and communication interface 604. The speed measurement signal receiver 601 is used to receive the train speed data measured by above velometers and the status data of these velometers, such as which velometer that have stopped working. Signals received are transmitted to the speed signal processor 602 which will calculate the current speed of the train, based on the signals received. After this the synchronization generator 603 can work out the synchronization signal though controlling the display information of the display module, based on the speed signals from the speed signal processor 602 and present the synchronization signal as shown in the above Table 1. With the information from the synchronization signal a protocol that can be observed by all modules can be created. This protocol can include information such as when to start playing and when to change the frequency. The synchronization signal will then be transmitted to display module 50 via the communication interface 604 to control the data display of the display module 50. The distance between L2 and pixel pitch S of the display module 50 are known factors. After the Nth display module is started, it will pass the L2/S column image and after that the N+1th display module will be started. After it passes the L2/S column image the N+2th display module will be started, see Drawing 3. Display module 50 further includes the power supply interface 501, synchronization signal receiver 502, pre-storage unit 503, display unit 504 and display controller 505.

Power supply interface 501 supplies power for module 50 while a pre-storage 503 stores playing data that have been made temporarily for playing. Synchronization receiver 502 receives synchronization signals generated by a synchronization module 60 and parses them to display controller 505 according to the protocol from the modules combined. Display unit 504 can be controlled from relevant commands and relevant information can be played according to stated commands for synchronization signals.

In accordance with the relationships that can be read from Table 1, speed values can be obtained, addresses of display modules can be selected and program number and brightness values can be configured. Furthermore, displayed odd rows or even rows can be set and video data corresponding to the display can be triggered according to corresponding speed values after the reception of synchronization signals. The triggering speed is different with different speed values and will thus generate that the display speed will vary. This means that the conformity between the speed of the train and the display playing will be synchronized in real time.

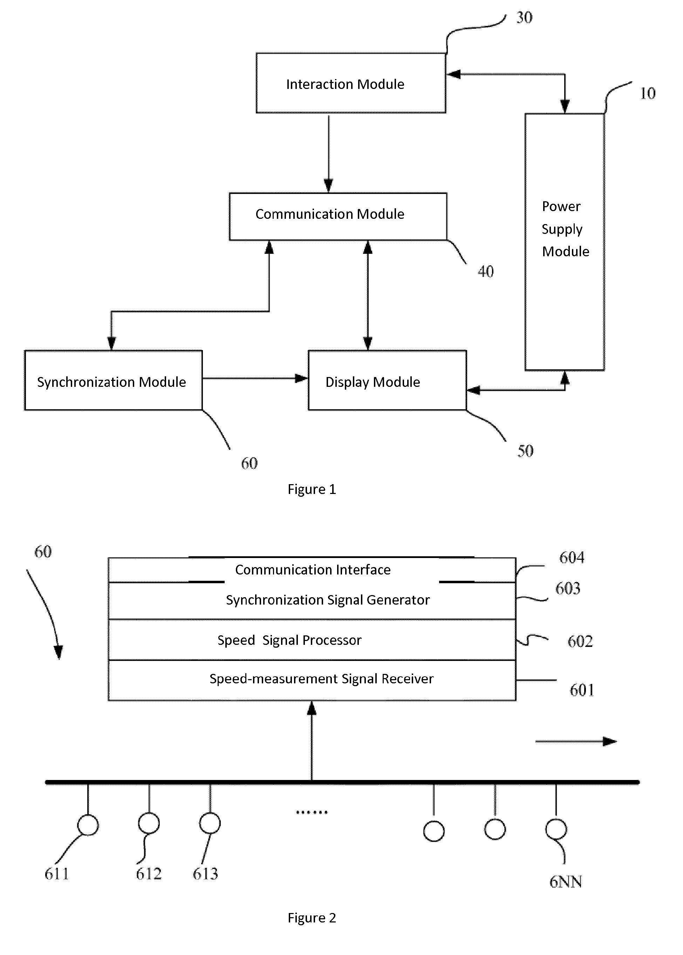

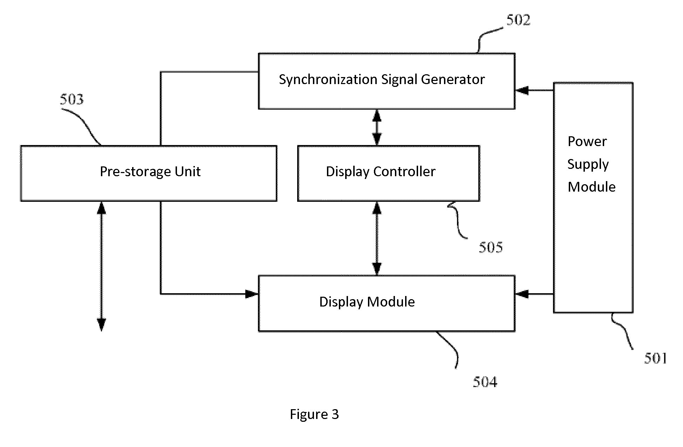

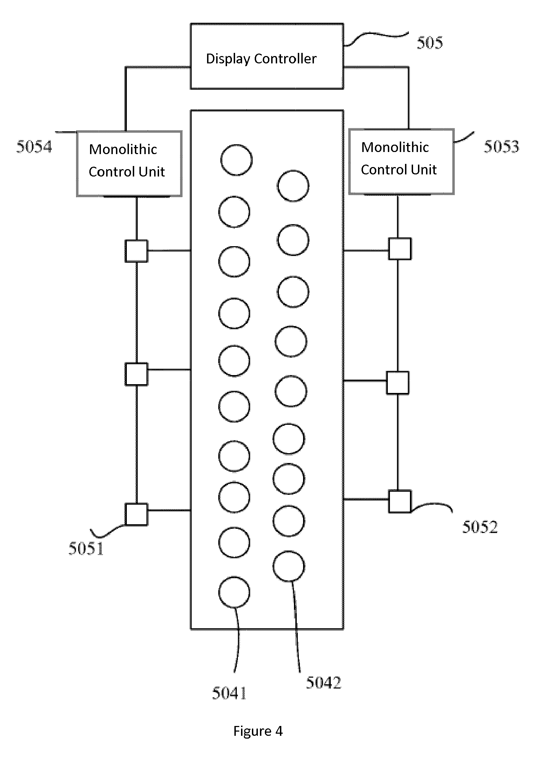

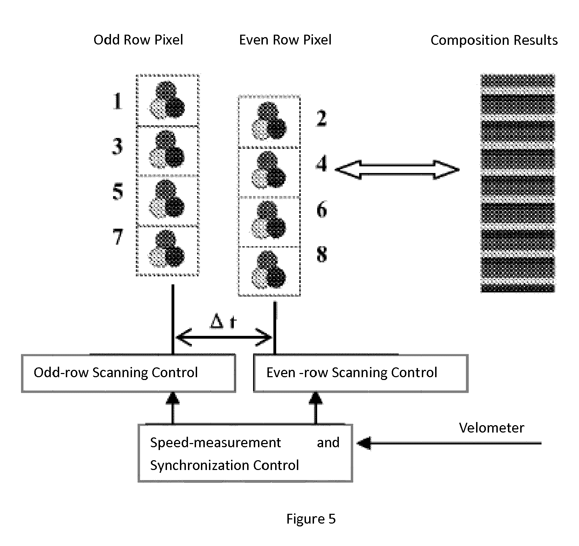

Further, with reference to Figures 4 and 5 a display controller 505 comprises two monolithic control units 5053 and 5054. These two control units are respectively connected to a group of LED drives 5052 and 5051 and can transmit corresponding control signal to each LED drive. The synchronization signal receiver 502 can parse synchronization signal commands and firstly it will judge whether the present display module shall be started. In case it is started, speed values and program numbers will be read while data in a pre-storage will be input into the LED drive. In accordance with control commands for image row in synchronization signals, the display of corresponding image rows will be started until the whole picture is displayed, and the display will be continued from images of the first row. The display section will be stopped after it has received stop commands for synchronization signals.

Display unit 504 comprises multiple LED light poles (something like 60 light poles) which are set in a subway tunnel and arranged with certain spacing. These light poles can respectively display different images. From the running train, the images from the different light poles can be overlapped into dynamical images. Each LED light pole comprises two rows which are respectively LED lights 5042 and 5041 with display of RGB color pixel which are driven by a group of LED drives 5052 and 5051. These two rows of LED lights are lit in order to result in a frame image.

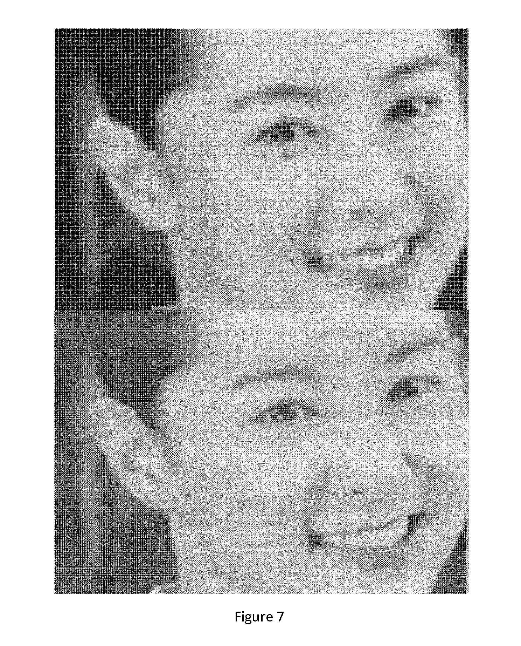

It is shown in Figures 4 and 5 that two rows of LED lights 5051 and 5052 are arranged vertically in a parallel way. Each LED drive can only drive LED particles in LED lights in the corresponding row. Each LED light in the second row is located horizontally to match the gap between corresponding two LED lights in the first row. For example, pixel interpolation is formed as displayed in Figure 5. A frame image originally displayed in a LED row is displayed in two rows. Scanning and image composition are implemented respectively in odd and even numbers. Thus, the display effect can be further strengthened. In Figure 7, images which are not synchronized and displayed in two rows with existing techniques are shown in the upper part while images with synchronization modules and two row display, in line with the invention, are shown in the lower part. Images displayed from the system in the invention are more detailed and clear.

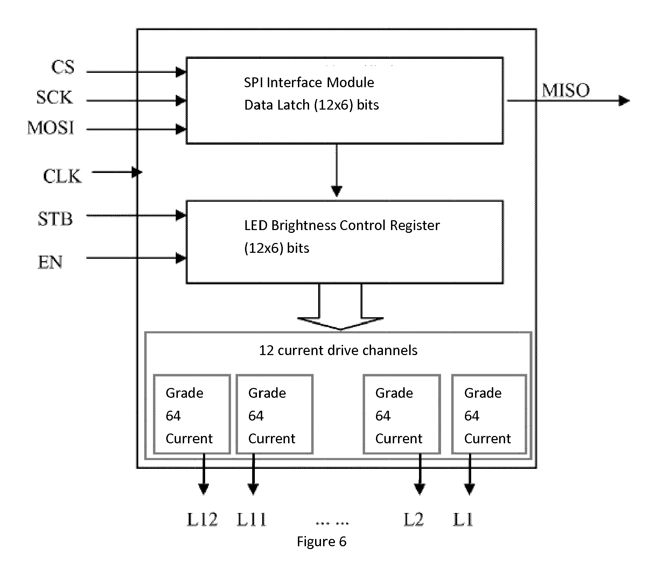

It is shown in Figure 6 that a LED drive comprises serial storages, namely a SPI interface, a led brightness regulator with a parallel storage and a generator of PWM drive signals. The stated serial storage receives synchronization signals serially. After the serial storage has received the signals it will store them in a parallel mode into the parallel storage for a time and break them down into communication data and control data. Drive signals generated in the generator of PWM drive signals will drive the lighting of corresponding LED lights.

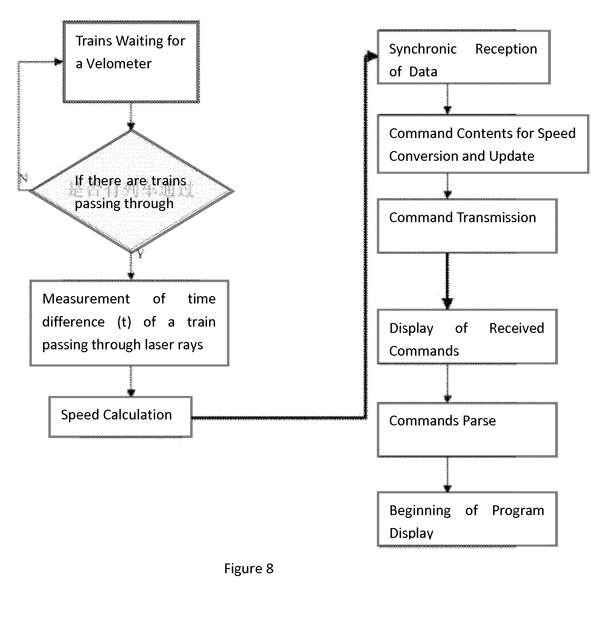

In general, Figure 8 provides a flow chart of the operation of synchronization modules and display modules and special parameters, such as description, are used. These parameters however, are only used for explaining the ratio that limits the technical proposals realized in the invention. Given parameters are pixel pitch S=1.905 mm and spacing of laser in a velometer L= 1000 mm.

It is shown in Figure 8 that when a train passes by the velometer at a speed of 60 km/h, the time it takes for the train to pass from one laser sensor to another, measured by the velometer, is: t=0. 06 s and the train speed measured by the velometer: v=L/t=16.7 m/ s. This speed value is transmitted to a synchronization module (the period it takes for the measurement of train passing till the completion of data transmission is less than 10 ms). The synchronization module will convert the speed into the time necessary for a train to pass the distance S=1. 905 mm: t1=v*S=31. 76 ms. The speed value will be transmitted to a display module according to the synchronization signal protocols. The display module will begin the display of programs in accordance with synchronization signal commands. The interval for scanning of each row of data of program images is 31. 76 ms. The time from the reception of speed data from a synchronization module to the starting of the display of a display module is less than 10 ms. A velometer is used for real-time measurement of the speed of a train and the transmission of each train value to the synchronization module. The synchronization module will begin to interpret the signals and if the speed of the train is the same as for the last one, control commands will be continuously transmitted as per last-time data until the reception of speed values are different from last ones. The interpretation of the signals will begin again and relevant command data in the synchronization module will be updated.

The invention uses synchronized speed measurement technology and makes use of human vision persistence phenomenon and television scanning principle. While the trains are running, passengers and display devices outside the trains will interact at a certain rate. The display LED light will pass the human vision range horizontally and each display device will display corresponding data information and the human eye will synthesize data seen into complete images to be displayed synchronously.

The present invention effectively improves the frame data frequency to avoid flicker. It does so by using virtual pixel and two row LED lights interlaced scanning technology. The pixel pitch is decreased in many ways by using spatial interpolation scanning technology, for example, shape-model 3528 3-in-1 LED lights are used. If the odd-even-row cross-distribution is not used in the layout, the pixel pitch will be 3.81 mm. According to the cross-distribution layout in the invention, the pixel pitch can be 1. 905 mm. This is a clear and cheap proposal in the LED display industry. It can ensure a clear image when close viewing. In cooperation with the corresponding LED drives, it can synchronize the display of high-definition images. When receiving the starting command in synchronization signals, the display module will first start odd rows (or even rows) according to the starting information of image rows in synchronization signals. When the odd row X-row is started, first-row data of display images of even rows (odd rows) will be started. The same image row will not be displayed in odd and even rows which will be started respectively according to synchronization signals. X is decided by the hardware design and will be different depending on different models of hardware in the invention such as X=8 or X=4.

Finally, it should be noted that the above embodiments are only used to describe the technical solution of the present invention rather than limiting the method of the present technique. The present invention in the application can be extended to other modifications, changes, applications and embodiments. Thus all such modifications, changes, applications and embodiments are in the scope of spirit and teaching of the present invention.

## Claims

1. A tunnel synchronization display system comprises an interaction module, a communication module, a display module and a synchronization module. The interaction module is used for storing video data or image data. The communication module is connected to the interaction module. In order to make the display of the video or image data synchronized to the speed of the train, the communication module and synchronization module is connected to the display module.The display module is provided in the tunnel and is used to display data from the interaction module according to the synchronization signals that are transmitted by the synchronization module. The stated synchronization module is used to measure the speed data of a train and convert the data to the time it takes for a train to pass through the pixel pitch of two adjacent pixels and provide synchronization signals of the time interval of the two adjacent rows of images. A synchronization module comprises multiple velometers and synchronization signal processors. A velometer includes multiple laser sensors arranged on the rail side and is used to read the speed of the train. The laser beam is parallel to the rail surface and perpendicular to the rail. The synchronization signal processor is used to obtain synchronization signals according to the speed of the train. Furthermore, the synchronization signal processor is used to obtain the time it takes for a train to pass through adjacent pixel pitch according to the speed of the train and adjacent pixel pitch.

2. The tunnel synchronization display system stated according to Claim 1 is **characterized by** that the synchronization signal processor comprises a speed-measurement signal receiver, a speed signal processor and a synchronization signal generator. The speed-measurement signal receiver is used to receive signals from the stated velometer and to transmit them to the speed signal processor. The speed signal processor will be used to calculate the current speed of a train according to received signals. A synchronization signal generator will generate synchronization signals of display image information of the control display module according to the received speed signals from the speed signal processor.

3. The tunnel synchronization display system stated according to Claim 1 is **characterized by** that the synchronization module is also used for the transmission of video data which consist of feedback of the synchronization signals via the communication module to the interaction module. This is then is used to regulate the interaction module, a velometer is arranged in the installation area of a display module. Laser reflection switches or laser correlation photoelectric switches are used as the measurement standard.

4. The tunnel synchronization display system stated according to Claim 1 is **characterized by** that the display module includes a synchronization signal receiver, a pre-storage unit, a display unit and a display controller. The pre-storage unit will store the playing data that have been made temporarily for playing. The synchronization signal receiver receives signals generated by a synchronization module, and parses and transmits them to the display controller according to the protocol that is created from information from the modules together. A display unit can be controlled by the display controller with help from commands from relevant information according to given synchronization signals.

5. The tunnel synchronization display system stated according to Claim 4 is **characterized by** that a display controller, according to synchronization signals, can obtain a speed value, select the display module address, configure program number and brightness values, set displayed rows of odd and even numbers and can trigger the drive to drive video data corresponding to the display according to corresponding speed values.

6. The tunnel synchronization display system stated according to Claim 4 is **characterized by** that a display controller comprises two monolithic control units that are connected to a group of LED drives. A display unit comprises multiple LED light poles and each LED pole comprises two rows that are respectively driven by a group of LED drives. The two rows of LED lights are lit in order to display one frame image.

7. The tunnel synchronization display system stated according to Claim 6 is **characterized by** that the two rows of LED lights are vertically arranged in a parallel way. Each LED drive can only drive LED particles in LED lights in the corresponding row. Each LED light in the second row is located horizontally in the gap between the corresponding two LED lights in the first row. Pixel interpolation is formed in the display. Interlaced scanning and image composition in two rows of displays are implemented respectively in odd and even numbers.

8. The tunnel synchronization display system stated according to Claim 6 is **characterized by** that a LED drive includes a serial storage, a led brightness regulator with a parallel storage and a generator of PWM drive signals. The stated serial storage receives the synchronization signals serially. After the serial storage receives the signals it will store them in a parallel mode into the parallel storage and break them down into communication data and control data. Drive signals generated in the generator of PWM drive signals will drive the lighting of corresponding LED lights.

9. The tunnel synchronization display system stated according to Claim 1 is **characterized by** that the interaction module is also used to produce playing images and store them. Further, the interaction module is configured for an administrator to set parameters corresponding to display contents and to manage the physical media or adjust the display parameters of the display module.

10. The tunnel synchronization display system stated according to Claim 2 is **characterized by** that the time difference of the train passing two laser sensors measured by a velometer is converted to the speed of the train and is transmitted to a synchronization module. The synchronization module will convert the speed value into the time it takes for a train to pass the distance of adjacent pixel points. This speed value will be transmitted to a display module in accordance with the synchronization signal protocol. The display module will, according to the command of synchronization signal, start displaying programs and will scan the data interval of each row of program images.
